# EUROPÄISCHE PATENTSCHRIFT

(11) **EP 3 548 253 B1**
(45) Veröffentlichungstag und Bekanntmachung des Hinweises auf die Patenterteilung: **21.07.2021**
(21) Anmeldenummer: 17797525.7
(22) Anmeldetag: 13.11.2017
(51) Int. Cl.: B29C 48/91, B29C 35/08, B29K 23/00

(54) **VERFAHREN ZUR HERSTELLUNG EINES POLYMEREN PROFILS MITTELS CHEMISCHER VERNETZUNG**
PROCESS FOR MANUFACTURING CHEMICALLY CROSS-LINKED PLASTIC PROFILES
FABRICATION DE PROFILES PLASTIQUES PAR RETICULATION CHIMIQUE

(30) Priorität: 29.11.2016 DE 102016122985
(43) Veröffentlichungstag der Anmeldung: 09.10.2019
(73) Patentinhaber: REHAU AG + Co, 95111 Rehau (DE)
(72) Erfinder: LINK, Alexander, 91056 Erlangen (DE); BILZ, Stephan, 04349 Leipzig (DE); ZIEGLER, Melanie, 95445 Bayreuth (DE); SONNTAG, Martin, 95030 Hof (DE); BÖHM, Volker, 95234 Sparneck (DE)
(86) Internationale Anmeldenummer: PCT/EP2017/001319
(87) Internationale Veröffentlichungsnummer: WO 2018/099586

(56) Entgegenhaltungen:
- WO-A2-97/10936
- WO-A2-2011/089159
- DE-A1-102007 026 751
- DE-A1-102010 039 238
- JP-A- H07 165 934
- JP-A- S59 184 626
- US-A1- 2003 051 809
- US-A1- 2010 089 906
- F. KAHN ET AL: "Laser-Induced Crosslinking of Ultra-Low- and High-Density Polyethylene", MACROMOLECULAR RAPID COMMUNICATIONS, Bd. 28, Nr. 2, 22. Januar 2007 (2007-01-22), Seiten 158-163, XP002776769, ISSN: 1521-3927, DOI: 10.1002/marc.200600617

## Beschreibung

Die Erfindung betrifft ein Verfahren zur Herstellung eines polymeren Profils mittels chemischer Vernetzung mit dem Merkmalen des Oberbegriffs des Patentanspruchs 1.

Bei dem polymeren Profil kann es sich insbesondere um eine langgestreckte Geometrie handeln, wie sie in einem Extrusionsverfahren kontinuierlich hergestellt werden kann. Additive im Sinne der Erfindung sind insbesondere Vernetzungsinitiatoren, die für die eingangs genannte chemische Vernetzung wesentlich sind.

Insbesondere betrifft die Erfindung ein Verfahren zur Herstellung eines extrudierten, rohrförmigen Polyethlyen(PE)-Kunststoffprofils im Wege einer peroxidischen Vernetzung des Polyethylens. Derartige PE-Xa-Rohre sind im Stand der Technik sehr verbreitet im Einsatz und werden beispielsweise als Transportleitung für Heizungs- und / oder Trinkwasser in Gebäuden oder aber auch zum Transport von Fernwärme eingesetzt. Im Stand der Technik werden die PE-Xa-Rohre durch Zugabe von Peroxiden in das Polyethylen-Material und mithilfe von Wärmestrahlung im sichtbaren und infraroten Bereich, so genannten Infrarotstrahlern, chemisch vernetzt. Hierbei werden die physikalisch-chemischen Eigenschaften des Polyethylens aufgrund der Vernetzung modifiziert. Insbesondere wird durch die chemische Vernetzung die thermische Belastbarkeit der Polyethylen-Rohre verbessert, so dass diese für Heißwasser-Anwendungen geeignet sind. Ferner wird hierdurch auch die Schlagzähigkeit und Spannungsrissbeständigkeit der Rohre erhöht.

Durch die eingebrachte Wärme werden im Vernetzungsprozess die Peroxide zu einem thermischen Zerfall gebracht, wodurch sich Radikale bilden. Diese Radikale bewirken eine chemische Vernetzung des Kunststoffmaterials (z.B. Vernetzung von Polyethylen zu PE-Xa). Als Wärmequelle werden im Stand der Technik häufig mit Quarzglas und Reflektor umgebene Heizwendeln verwendet, die in Abhängigkeit der Temperatur unterschiedlich viel Strahlung in einem weiten Wellenlängenbereich emittieren. Die Intensitätsverteilung in Abhängigkeit von der Wellenlänge wird im Wesentlichen durch das Plancksche Strahlungsgesetz beschrieben. Durch diesen kontaktlosen Energieeintrag wird der Kunststoff erwärmt und mittels der beim thermischen Zerfall der zugesetzten Peroxide entstehenden Radikale chemisch vernetzt. Nachteilig bei diesem Stand der Technik ist der hohe Energieverbrauch aufgrund nicht optimaler Prozessführung. Essentiell für das Ergebnis der Vernetzung ist die Wahl des richtigen Wellenlängenbereiches, da ansonsten die Energie z.B. an der Oberfläche des Kunststoffs vollständig absorbiert wird. Dadurch kann einerseits die Außenoberfläche des Rohres überhitzen und geschädigt werden, während andererseits die Rohrwandinnenseite aufgrund eines zu geringen Wärmeeintrags nicht vollständig vernetzt wird. Andererseits ist es bei einer falsch gewählten Wellenlänge auch möglich, dass die Strahlung ohne Energieabgabe die Rohrwand ungehindert passiert, das Rohrmaterial also transparent in Bezug auf die eingebrachte Wellenlänge ist. Insgesamt wird aufgrund der im Stand der Technik erfolgenden Bestrahlung des Kunststoffs in einem leistungsabhängigen weiten Wellenlängenbereich regelmäßig ein vergleichsweise großer Anteil der Strahlung nicht absorbiert und somit in Form von Verlustwärme an die Umgebung abgegeben. Neben dem hohen Energieverlust resultiert hieraus der zusätzliche Nachteil, dass die Umgebung (Luft, Metall etc.) aktiv gekühlt werden muss. Eine optimale Prozessführung ist folglich im Stand der Technik nicht möglich.

Ein Verfahren mit den Merkmalen des Oberbegriffs des Patentanspruchs 1 ist aus der WO 97/10936 sowie der DE10 2007 026 751 A1 bekannt. Die Bestrahlung eines chemisch zu vernetzenden Kunststoffbauteils mit Laserstrahlung ist in der DE 10 2010 039 238 A1 beschrieben.

Der Erfindung liegt die Aufgabe zugrunde, ein Verfahren mit den eingangs beschriebenen Merkmalen anzugeben, das einen kostengünstigen und gleichzeitig homogenen Vernetzungsvorgang ohne thermische Schädigung des Kunststoffmaterials ermöglicht.

Erfindungsgemäß wird diese Aufgabe durch die Merkmale des Patentanspruchs 1 gelöst. Überraschenderweise gelingt es durch die Verwendung eines Lasers mit einer Wellenlänge in einem genau definierten Bereich die im Stand der Technik seit Jahrzehnten bestehenden Nachteile bei der Herstellung entsprechender Profile, insbesondere vernetzten Polyethylen(PE-X)-Rohren, zu überwinden. Im Stand der Technik wurden Laser in Fertigungsverfahren bislang primär zum Verschweißen oder auch Zerschneiden von Gegenständen eingesetzt. Zweckmäßigerweise wird als Laser ein Dioden-Laser verwendet. Aufgrund der definierten Wellenlänge des Lasers kann eine ganz gezielte Aktivierung des Kunststoffmaterials erfolgen, so dass eine über den Querschnitt gleichmäßige Erwärmung dieses Materials und damit ein gleichmäßiger thermischer Zerfall der Additive zu Radikalen ermöglicht wird. Das Ergebnis ist eine homogene, über den gesamten Querschnitt gleichmäßige Vernetzung des Kunststoffprofils, ohne dass es zu einer thermischen Schädigung aufgrund eines lokal zu starken Energieeintrags, insbesondere an der äußeren Oberfläche, kommt.

Die erfindungsgemäße Lehre geht einher mit der Erkenntnis, dass die optischen Eigenschaften von Kunststoffen stark wellenlängenabhängig sind. Abhängig von der Wellenlänge der Strahlungsquelle wird die elektromagnetische Strahlung mehr oder weniger stark absorbiert, reflektiert oder gestreut und dringt daher unterschiedlich tief in die Kunststoffe ein. Abhängig von dem zu vernetzenden Material und der Materialdicke kann durch die Verwendung eines Lasers als Wärmequelle ein sehr enger Wellenlängenbereich ausgewählt, damit eine sehr kontrollierte Erwärmung des Kunststoffprofils und hierdurch letztendlich eine gleichmäßige chemische Vernetzung des Profils über den gesamten Querschnitt gewährleistet werden. Der Laser zeichnet sich außerdem durch eine geringe Divergenz der Strahlung aus, so dass diese räumlich sehr gut gelenkt werden kann.

Erfindungsgemäß wird als Laser ein Infrarot-Laser mit einer Wellenlänge im Bereich von 780 nm bis 1 mm, vorzugsweise 780 nm bis 20 µm, insbesondere 780 nm bis 1 µm, verwendet. Infrarotlaser zeichnen sich durch eine sehr lange Lebensdauer und hohe Leistungsdichte aus, was sie von herkömmlichen Infrarotstrahlern unterscheidet. Darüber hinaus haben sie keinen merklichen Abfall der Leistung im Verlauf ihrer Lebensdauer. Auch verschiebt sich beim Laser die Wellenlänge nicht bei Änderung der Leistung, sondern bleibt konstant. Bei den im Stand der Technik eingesetzten üblichen IR-Strahlern wandert hingegen bei Reduzierung der Leistung das Leistungsmaximum hin zu größeren Wellenlängen.

Das Kunststoffprofil wird extrudiert und hierbei als Hohlprofil, z.B. als Rohr, ausgebildet. Als Additive können insbesondere Peroxide verwendet werden. Die Verwendung anderer Additive neben oder anstelle von Peroxiden liegt jedoch ebenfalls im Rahmen der Erfindung. So können beispielsweise als Additive Azoverbindungen, beispielsweise Azobisisobutyronitril verwendet werden. Als Peroxide können beispielsweise eingesetzt werden Dibenzoylperoxid, Dicumylperoxid und Peroxide, welche eine Tertiär-Butyl-Peroxy-Gruppe aufweisen wie Hexane, Cyclohexane, Hexine, Valerate, Hexanoate, Benzoate und Carbonate. Besonders geeignet sind in diesem Zusammenhang Dialkylperoxide, Peroxyester, Diacylperoxide, Hydroperoxide, Peroxydicarbonate, Peroxyketale und zyklische Peroxide. Im Rahmen der Erfindung liegt es ferner, dass als Additive zwei oder mehr der vorgenannten Substanzen in beliebiger Kombination gemeinsam verwendet werden. Das Kunststoffmaterial, dem die Additive zugesetzt sind, enthält zweckmäßigerweise Polyethylen, wobei das Kunststoffmaterial insbesondere aus Polyethylen besteht.

Zweckmäßigerweise wird das polymere Profil mittels des Lasers vollständig auf eine Temperatur von mindestens 140 °C, vorzugsweise mindestens 200 °C erwärmt. Im Rahmen der Erfindung liegt es insbesondere auch, das polymere Profil mittels des Lasers vollständig auf eine Temperatur von mindestens 210 °C, vorzugsweise mindestens 220 °C zu erwärmen. Vollständig meint in diesem Zusammenhang insbesondere, dass eine entsprechende Erwärmung über den gesamten Querschnitt des Profils hinweg erfolgt, insbesondere also auch an dessen der Laserquelle abgewandten Innenseite. Hierdurch wird eine vollständige thermische Zersetzung der Additive zu den Radikalen sichergestellt. Im Rahmen der Erfindung liegt es, dass das Kunststoffprofil durch kontinuierlichen Vorschub am ortsfesten Laser vorbeigeführt wird, was insbesondere bei einer Herstellung des Kunststoff-Profils im Wege eines Extrusionsverfahrens zweckmäßig ist.

Erfindungsgemäß werden dem Kunststoffmaterial neben den Additiven Laserpigmente zugesetzt, die eine merkliche Absorption in dem vom Laser ausgestrahlten Wellenlängenbereich aufweisen, und zwar in Form von Infrarot(IR)-Strahlung absorbierende Laserpigmenten. Dies Laserpigmente können beispielsweise aus Ruß (z.B. Industrieruß) und/oder Antimon-Zinn-Oxid und/oder Indium-Zinn-Oxid und/oder Indiumoxid und/oder Antimontrioxid und/oder Antimonoxid beschichtete Glimmerpigmenten und/oder Antimon-Zinn-Oxid beschichtete Glimmerpigmenten und/oder Zinnoxid beschichtete Glimmerpigmenten und/oder Kupferhydroxidphosphat und/oder Nickeldithiolen Komplexen und/oder Lanthanhexaborid und/oder Quaterrylen Komplexen bestehen. Hierdurch kann die Laserstrahlungsabsorption innerhalb des Kunststoffmaterials gezielt erhöht werden. Eine Durchstrahlung des Laserlichtes durch das Kunststoffmaterial, also ein transparentes Verhalten des Kunststoffmaterials, wird hierdurch verhindert. In diesem Zusammenhang hat es sich insbesondere als zweckmäßig herausgestellt, das Kunststoffprofil mit einer Kunststoff-Außenschicht zu versehen, die eine niedrigere Konzentration an IR-Strahlung absorbierenden Laserpigmenten besitzt als das Kunststoffmaterial. Sofern bei einem nicht erfindungsgemäßen Verfahren kein Infrarot-Laser eingesetzt wird, weist die Kunststoff-Außenschicht entsprechend allgemein eine niedrigere Konzentration von an die Laserquelle entsprechend angepassten Laserpigmenten auf als das Kunststoffmaterial. So kann beispielsweise die Gewichtskonzentration dieser Laserpigmente in der Kunststoff-Außenschicht weniger als 50 %, beispielsweise weniger als 20 %, insbesondere weniger als 10 %, vorzugsweise weniger als 5 % der Laserpigment-Gewichtskonzentration im Kunststoffmaterial des Kunststoff-Profils betragen. Bei der erfindungsgemäßen Verwendung eines IR-Lasers gelten die vorstehend genannten Werteangaben entsprechend für die IR-Laserpigments-Gewichtskonzentrationen in der Außenschicht bzw. im Profil. Im Rahmen der Erfindung liegt es hierbei insbesondere, dass die Kunststoff-Außenschicht frei von an die Laserstrahlung angepassten Laserpigmenten ist, bei Verwendung eines IR-Lasers also frei von IR-Strahlung absorbierenden Laserpigmenten ist. Die Kunststoff-Außenschicht besteht zweckmäßigerweise aus demselben polymeren Material wie das Kunststoffprofil, insbesondere Polyethylen. Vorzugsweise sind auch dem Kunststoffmaterial der Kunststoff-Außenschicht Vernetzungs-Additive zugesetzt, insbesondere dieselben wie dem Kunststoffmaterial des Kunststoffprofils. Insgesamt ist es durch die vorstehend beschriebene Maßnahme möglich, die im Stand der Technik häufig zu beobachtende Überhitzung der äußeren Oberfläche des Kunststoffprofils bei gleichzeitig zu geringem Vernetzungsgrad im der Wärmequelle abgewandten Innenbereich des Profils zu verhindern. Sofern es sich beispielsweise - wie bereits erläutert - im Rahmen einer bevorzugten Ausführungsform der Erfindung um die Herstellung eines extrudierten Kunststoff-Rohres handelt, wird durch die beschriebene Maßnahme ein Überhitzen der Kunststoff-Außenschicht des Rohres aufgrund deren reduzierter Laserpigmentkonzentration verhindert und der Wärmeeintrag hin zum Innenwandungsbereich mit höherer Pigmentkonzentration verlagert, welcher im Stand der Technik häufig unter einem zu geringen Vernetzungsgrad leidet. Dadurch kann bei einer entsprechenden Abstimmung der Schichtdicken von Kunststoff-Außenschicht und Kunststoffprofil zueinander sowie einer geeigneten Bemessung der Konzentration an Laserpigmenten eine über den gesamten Rohrquerschnitt gleichmäßige Erwärmung und damit einhergehend ein homogener Zerfall der Additive und hierdurch letztendlich eine gleichmäßige Vernetzung des Kunststoffprofis über den gesamten Querschnitt erzielt werden. Grundsätzlich hat es sich in diesem Zusammenhang als zweckmäßig erwiesen, die Kunststoff-Außenschicht und das Kunststoffprofil im Wege einer Coextrusion herzustellen. Zweckmäßigerweise ist die Schichtdicke des Kunststoffprofils größer als die Schichtdicke der Kunststoff-Außenschicht.

Im Rahmen der Erfindung liegt es ferner, dass zwischen der Kunststoff-Außenschicht und dem Kunststoffprofil mindestens eine weitere Kunststoff-Zwischenschicht vorgesehen sind, wobei die Gewichtskonzentration der Laserpigmente in dieser Zwischenschicht zweckmäßigerweise niedriger als im Kunststoffprofil und höher als in der Kunststoff-Außenschicht ist. Die mindestens eine Kunststoff-Zwischenschicht besteht zweckmäßigerweise aus demselben polymeren Material wie das Kunststoffprofil, insbesondere Polyethylen. Vorzugsweise sind auch dem Kunststoffmaterial der Kunststoff-Zwischenschicht Vernetzungs-Additive zugesetzt, insbesondere dieselben wie dem Kunststoffmaterial des Kunststoffprofils. Sofern zwei oder mehr Kunststoff-Zwischenschichten vorgesehen sind, hat es sich als zweckmäßig erwiesen, wenn die Gewichtskonzentration der Laserpigmente von der innersten Schicht, also beginnend mit dem Kunststoffprofil über die mindestens zwei Kunststoff-Zwischenschichten zur Kunststoff-Außenschicht hin in den einzelnen Schichten immer weiter abnimmt.

Das mit dem vorstehend beschriebenen Verfahren hergestellte polymere Profil kann seinen Einsatz finden in Form eines Rohres, beispielsweise PE-X-Rohres, welches insbesondere als Transportleitung für Heizungs- und/oder Trinkwasser oder aber auch zum Transport von Fernwärme verwendet wird.

Im Folgenden wird die Erfindung anhand einer lediglich ein Ausführungsbeispiel darstellenden Zeichnung erläutert. Es zeigen schematisch:
- Fig. 1:: ein erfindungsgemäßes Verfahren zur Herstellung eines polymeren Profils;
- Fig. 2:: eine weiteres erfindungsgemäßes Verfahren zur Herstellung eines polymeren Profils,
- Fig. 3:: den Schnitt A-A in Fig. 1 und
- Fig. 4:: den Schnitt B-B in Fig. 2 und
- Fig. 5:: eine den Fig. 3 und 4 entsprechende Darstellung einer weiteren Ausführungsform der Erfindung

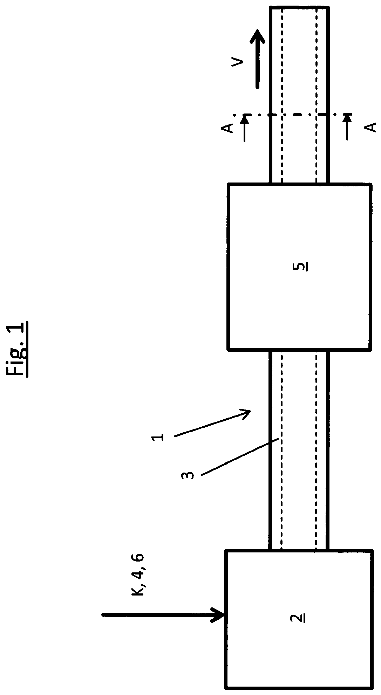

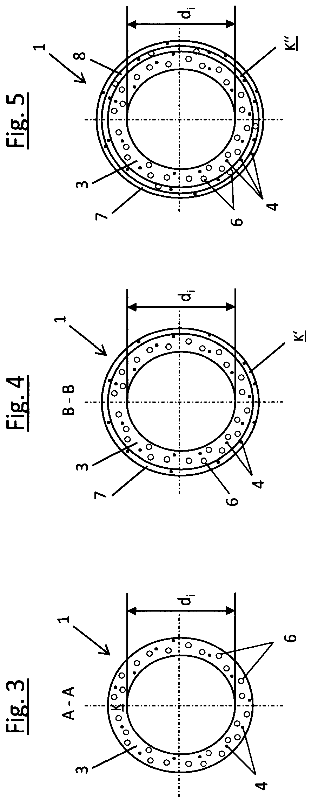

Die Fig. 1 zeigt ein Verfahren zur Herstellung eines polymeren Profils 1 mittels chemischer Vernetzung. Zunächst wird in einem Extruder 2 ein Kunststoffprofil 3 aus Kunststoffmaterial K gefertigt, wobei dem Kunststoffmaterial K Additive 4 zugesetzt sind (s. Fig. 3). Bei dem Kunststoffprofil 3 handelt es sich im Ausführungsbeispiel um ein geschlossenes Hohlprofil in Form eines Rohres. An den Extrusionsprozess anschließend wird das Kunststoffprofil 3 mittels einer Wärmequelle 5 erwärmt. Hierdurch werden die dem Kunststoffmaterial K zugesetzten Additive 4 thermisch zersetzt und zerfallen zu Radikalen. Diese Radikale bewirken eine chemische Vernetzung des Kunststoffmaterials K. Im Ausführungsbeispiel werden als Additive 4 Peroxide eingesetzt und als Kunststoffmaterial K Polyethylen. Durch den Wärmeeintrag der Wärmequelle 5 erfolgt die gewünschte peroxidische Vernetzung des Polyethylens K zu PE-Xa. Bis hierhin entspricht die erläuterte Verfahrensweise dem Stand der Technik.

Erfindungsgemäß wird nun jedoch als Wärmequelle 5 ein Laser verwendet, wobei dieser im Ausführungsbeispiel als Infrarot-Diodenlaser mit einer Wellenlänge von 980 nm ausgebildet ist. Mittels des Lasers 5 wird das polymere Profil 1 vollständig, d.h. über seinen gesamten Querschnitt hinweg auf eine Temperatur von ca. 230 °C erwärmt, so dass eine vollständige thermische Zersetzung der Peroxide 4 gewährleistet ist. Es ist anhand der Fig. 1 erkennbar, dass das Kunststoffprofil 3 aufgrund des Extrusionsvorschubs V kontinuierlich am ortsfesten Laser 5 vorbeigeführt wird. Um die Absorption der Laserstrahlung zu verbessern, sind im Ausführungsbeispiel dem Kunststoffmaterial K neben den peroxidischen Additiven 4 zusätzlich IR-Strahlung absorbierende Laserpigmente 6, z.B. in Form von Industrieruß mit einem Kohlenstoffgehalt von 80 - 99,5 Gew.-%, zugesetzt (s. Fig. 3).

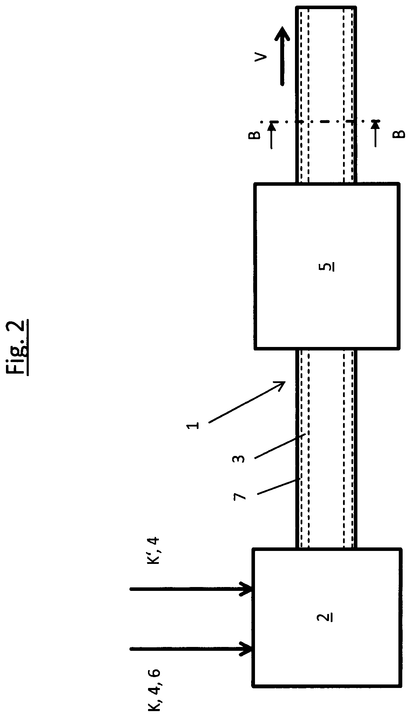

Beim Ausführungsbeispiel gemäß der Fig. 2 wird das Kunststoffprofil 3 mit einer Kunststoff-Außenschicht 7 versehen, wobei die Kunststoff-Außenschicht 7 frei von IR-Strahlung absorbierenden Laserpigmenten 6 ist (s. Fig. 4). Die Kunststoff-Außenschicht 7 wird mit dem Kunststoffprofil 3 coextrudiert, so dass entsprechend zwei Materialströme, einer für das Kunststoffmaterial K des Kunststoffprofils 3 und einer für das Polymermaterial K' der Kunststoff-Außenschicht 7 in den Extruder 2 einlaufen.

Die Fig. 4 zeigt das gemäß dem Verfahren in Fig. 2 hergestellte polymere Extrusionsprofil 1 im Querschnitt mit dem dickeren Kunststoffprofil 3 im Inneren und der dünneren Kunststoff-Außenschicht 7. Es ist erkennbar, dass dem Kunststoffmaterial K des Kunststoffprofils 3 sowohl die Additive 4 als auch die IR-Strahlung absorbierenden Laserpigmente 6 zugesetzt sind. Dem ebenfalls aus Polyethlyen bestehenden Polymermaterial K' der Kunststoff-Außensicht 7 sind hingegen lediglich die Additive 4, ebenfalls in Form von Peroxiden, zugesetzt jedoch keine Laserpigmente 6. Hierdurch wird eine bevorzugte Erwärmung des die Innenschicht bildenden Kunststoffprofils 3 bewirkt, so dass dieses vollständig vernetzt. Die Außenschicht 7 hingegen wird durch den Wärmeeintrag nicht zu stark erhitzt und erleidet somit keine thermische Schädigung.

In Fig. 5 ist gegenüber dem Ausführungsbeispiel gemäß Fig. 4 zwischen der Kunststoff-Außenschicht 7 und dem Kunststoffprofil 3 eine zusätzliche Kunststoff-Zwischenschicht 8 vorgesehen. In dieser Kunststoff-Zwischenschicht 8 sind ebenfalls Laserpigmente 6 vorhanden, jedoch ist die Gewichtskonzentration der Laserpigmente 6 in dieser ebenfalls aus Polyethlyenmaterial K" und peroxidischen Additiven 4 gebildeten Zwischenschicht 7 nur halb so hoch wie im Kunststoffprofil 3.

Die in den Ausführungsbeispielen dargestellten polymeren Profile 1 werden beispielsweise als Rohre für Heizungs- und / oder Trinkwasseranwendungen verwendet oder auch alternativ als Transportleitung für Fernwärme. Der in den Fig. 3 bis 5 dargestellte innere Durchmesser der Kunststoffprofile 1, welcher den freien Strömungsquerschnitt definiert, bewegt sich hierbei im Bereich von dᵢ = 8 bis 300 mm, insbesondere 20 bis 100 mm.

## Patentansprüche

1. Verfahren zur Herstellung eines polymeren Profils (1) mittels chemischer Vernetzung,
- wobei zunächst ein Kunststoffprofil (3) aus Kunststoffmaterial (K) mit zugesetzten Additiven (4) gefertigt wird,
- wobei danach das Kunststoffprofil (3) mittels einer Wärmequelle (5) erwärmt wird und hierdurch die dem Kunststoffmaterial (K) zugesetzten Additive (4) thermisch zu Radikalen zerfallen,
- wobei diese Radikale eine chemische Vernetzung des Kunststoffmaterials (K) bewirken, und
- wobei das Kunststoffprofil (3) extrudiert und als Hohlprofil, insbesondere als Rohr ausgebildet wird,
**dadurch gekennzeichnet,**
**dass** als Wärmequelle (5) ein Infrarot-Laser mit einer Wellenlänge im Bereich von 780 nm bis 1 mm verwendet wird, und dass dem Kunststoffmaterial (K) neben den Additiven (4) an die Laserstrahlung angepasste, IR-Strahlung absorbierende Laserpigmente (6) zugesetzt werden.

2. Verfahren nach Anspruch 1, **dadurch gekennzeichnet, dass** als Additive (4) Peroxide verwendet werden.

3. Verfahren nach Anspruch 1 oder 2, **dadurch gekennzeichnet, dass** das Kunststoffmaterial (K) Polyethylen enthält, vorzugsweise aus Polyethylen besteht.

4. Verfahren nach einem der Ansprüche 1 bis 3, **dadurch gekennzeichnet, dass** das polymere Profil (1) mittels des Lasers (5) vollständig auf eine Temperatur von mindestens 140 °C, vorzugsweise mindestens 200 °C, erwärmt wird.

5. Verfahren nach einem der Ansprüche 1 bis 4, **dadurch gekennzeichnet, dass** das Kunststoffprofil (3) durch kontinuierlichen Vorschub am ortsfesten Laser (5) vorbeigeführt wird.

6. Verfahren nach einem der Ansprüche 1 bis 5, **dadurch gekennzeichnet, dass** das Kunststoffprofil (3) mit einer Kunststoff-Außenschicht (7) versehen wird, die eine niedrigere Konzentration von an die Laserstrahlung angepassten Laserpigmenten (6) aufweist als das Kunststoffmaterial (K), insbesondere frei von Laserpigmenten (6) ist.

7. Verfahren nach Anspruch 6, **dadurch gekennzeichnet, dass** zwischen der Kunststoff-Außenschicht (7) und dem Kunststoffprofil (3) mindestens eine weitere Kunststoff-Zwischenschicht (8) vorgesehen wird, wobei die Gewichtskonzentration der Laserpigmente in dieser Kunststoff-Zwischenschicht (8) niedriger als im Kunststoffprofil (3) und höher als in der Kunststoff-Außenschicht (7) ist.

8. Verfahren nach Anspruch 7, **dadurch gekennzeichnet, dass** zwei oder mehr Kunststoff-Zwischenschichten vorgesehen werden, wobei die Gewichtskonzentration der Laserpigmente beginnend mit dem Kunststoffprofil (3) über die mindestens zwei Kunststoff-Zwischenschichten (8) zur Kunststoff-Außenschicht (7) hin in den einzelnen Schichten (3, 8, 7) immer weiter abnimmt.

9. Verfahren nach einem der Ansprüche 6 bis 8, **dadurch gekennzeichnet, dass** die Kunststoff-Außenschicht (7) mit dem Kunststoffprofil (3) coextrudiert wird.

## Claims

1. A method of producing a polymer profile (1) by chemical crosslinking,
- wherein a plastics profile (3) is first manufactured from a plastics material (K) with added additives (4),
- wherein the plastics profile (3) is then heated using a heat source (5) and, as a result, the additives (4) that have been added to the plastics material (K) thermally decompose to form radicals,
- wherein these radicals cause a chemical crosslinking of the plastics material (K), and
- wherein the plastics profile (3) is extruded and formed as a hollow profile, in particular as a pipe,
**characterised in that**
an infrared laser with a wavelength in the range of 780 nm to 1 mm is used as the heat source (5), and **in that**, in addition to the additives (4), IR-radiation-absorbing laser pigments (6) that are adapted to the laser radiation are added to the plastics material (K).

2. The method according to claim 1, **characterised in that** peroxides are used as the additives (4).

3. The method according to claim 1 or 2, **characterised in that** the plastics material (K) contains polyethylene, and preferably consists of polyethylene.

4. The method according to one of claims 1 to 3, **characterised in that** the polymer profile (1) is heated completely to a temperature of at least 140 °C, preferably at least 200 °C, using the laser (5).

5. The method according to one of claims 1 to 4, **characterised in that** the plastics profile (3) is moved past the stationary laser (5) by continuous feed.

6. The method according to one of claims 1 to 5, **characterised in that** the plastics profile (3) is provided with a plastics outer layer (7), which has a lower concentration of laser pigments (6) that are adapted to the laser radiation than the plastics material (K) and is in particular free from laser pigments (6).

7. The method according to claim 6, **characterised in that** between the plastics outer layer (7) and the plastics profile (3) at least one further plastics intermediate layer (8) is provided, wherein the concentration by weight of the laser pigments in this plastics intermediate layer (8) is lower than in the plastics profile (3) and higher than in the plastics outer layer (7).

8. The method according to claim 7, **characterised in that** two or more plastics intermediate layers are provided, wherein the concentration by weight of the laser pigments becomes progressively lower in the individual layers (3, 8, 7), starting from the plastics profile (3) through the at least two plastics intermediate layers (8) to the plastics outer layer (7).

9. The method according to one of claims 6 to 8, **characterised in that** the plastics outer layer (7) is coextruded with the plastics profile (3).

## Revendications

1. Procédé pour fabriquer un profilé polymère (1) au moyen d'une réticulation chimique,
- dans lequel tout d'abord un profilé en matière plastique (3) est produit à partir de matériau en matière plastique (K) auquel des additifs (4) ont été ajoutés,
- dans lequel ensuite le profilé en matière plastique (3) est chauffé au moyen d'une source de chaleur (5) ce qui a pour effet que les additifs (4) ajoutés au matériau en matière plastique (K) se décomposent thermiquement en radicaux,
- dans lequel lesdits radicaux entraînent une réticulation chimique du matériau en matière plastique (K), et
- dans lequel le profilé en matière plastique (3) est extrudé et est réalisé en tant que profilé creux, en particulier en tant que tuyau,
**caractérisé en ce**
**qu'**un laser infrarouge avec une longueur d'onde dans la plage de 780 nm à 1 mm est utilisé en tant que source de chaleur (5), et que des pigments laser (6) absorbant le rayonnement IR, adaptés au rayonnement laser sont ajoutés, outre les additifs (4), au matériau en matière plastique (K).

2. Procédé selon la revendication 1, **caractérisé en ce que** des peroxydes sont utilisés en tant qu'additifs (4).

3. Procédé selon la revendication 1 ou 2, **caractérisé en ce que** le matériau en matière plastique (K) contient du polyéthylène, de préférence est constitué de polyéthylène.

4. Procédé selon l'une quelconque des revendications 1 à 3, **caractérisé en ce que** le profilé polymère (1) est chauffé, au moyen du laser (5), en totalité à une température d'au moins 140 °C, de préférence d'au moins 200 °C.

5. Procédé selon l'une quelconque des revendications 1 à 4, **caractérisé en ce que** le profilé en matière plastique (3) est guidé le long du laser stationnaire (5) par un avancement continu.

6. Procédé selon l'une quelconque des revendications 1 à 5, **caractérisé en ce que** le profilé en matière plastique (3) est pourvu d'une couche extérieure en matière plastique (7), qui présente une concentration de pigments laser (6) adaptés au rayonnement laser inférieure à celle du matériau en matière plastique (K), en particulier est dépourvue de pigments laser (6).

7. Procédé selon la revendication 6, **caractérisé en ce qu'**au moins une autre couche intermédiaire en matière plastique (8) est prévue entre la couche extérieure en matière plastique (7) et le profilé en matière plastique (3), dans lequel la concentration, en poids, des pigments laser dans ladite couche intermédiaire en matière plastique (8) est inférieure à celle dans le profilé en matière plastique (3) et est supérieure à celle dans la couche extérieure en matière plastique (7).

8. Procédé selon la revendication 7, **caractérisé en ce que** deux couches intermédiaires en matière plastique ou plus sont prévues, dans lequel la concentration, en poids, des pigments laser ne cesse de baisser dans les diverses couches (3, 8, 7) en partant du profilé en matière plastique (3) jusqu'à la couche extérieure en matière plastique (7) en passant par les au moins deux couches intermédiaires en matière plastique (8).

9. Procédé selon l'une quelconque des revendications 6 à 8, **caractérisé en ce que** la couche extérieure en matière plastique (7) est coextrudée avec le profilé en matière plastique (3).
